# EUROPEAN PATENT APPLICATION

(11) **EP 3 943 547 A1**
(43) Date of publication of application: **26.01.2022**
(21) Application number: 20787634.3
(22) Date of filing: 23.03.2020
(51) Int. Cl.: C08L 59/00, C08L 51/00

(54) **POLYFORMALDEHYDE COMPOSITE MATERIAL, PREPARATION METHOD THEREFOR AND USE OF SEBS AS MATTING AGENT IN POLYFORMALDEHYDE**

(30) Priority: 11.04.2019 CN 201910289253
(71) Applicant: Kingfa Sci. & Tech. Co., Ltd., Guangzhou, Guangdong 510663 (CN)
(72) Inventor: CAO, Shaoqiang, Guangzhou, Guangdong 510663 (CN); YE, Nanbiao, Guangzhou, Guangdong 510663 (CN); HUANG, Xianbo, Guangzhou, Guangdong 510663 (CN); CHEN, Feng, Guangzhou, Guangdong 510663 (CN); FU, Xuejun, Guangzhou, Guangdong 510663 (CN); YU, Quan, Guangzhou, Guangdong 510663 (CN); DING, Chao, Guangzhou, Guangdong 510663 (CN); PENG, Zhongquan, Guangzhou, Guangdong 510663 (CN)
(74) Representative: dompatent von Kreisler Selting Werner - Partnerschaft von Patent- und Rechtsanwälten mbB
(86) International application number: PCT/CN2020/080613
(87) International publication number: WO 2020/207235

(57) **Abstract**

The present invention provides a polyformaldehyde composite material, in parts by weight, including the following components: 70 to 95 parts of a polyformaldehyde; 5 to 20 parts of a SEBS; wherein, the SEBS is acid modified or amine modified. Due to modification by acid or amine, and presence of a polystyrene segment, a compatibility of the SEBS with the polyformaldehyde reduces because of a steric hindrance effect, which reduces an ability of a POM molecular chain to arrange regularly. When injection molded into a product or template, an incompatibility of the material itself will form a micro-rough effect on a surface of the material. When an incident light reaches the micro-rough surface, a reflection direction of the light will change and thus a diffuse reflection occurs, and a low-gloss material is obtained.

## Description

### TECHNICAL FIELD

The present invention relates to the technical field of polymer materials, and particularly relates to a polyformaldehyde composite material, preparation method thereof and use of SEBS (styrene ethylene butylene styrene) as a delustrant in a polyformaldehyde.

### BACKGROUND

Polyformaldehyde (POM) is divided into a formaldehyde homopolymer or a formaldehyde copolymer. Wherein, DuPont USA obtained a formaldehyde homopolymer by polymerizing formaldehyde around 1955. Polyformaldehyde is easy to crystallize, with a crystallinity of 70% or more. A melting temperature of a homopolyformaldehyde is around 180°C. It is another engineering plastic with excellent comprehensive properties after polyamide, with high mechanical properties such as strength, modulus, abrasion resistance, toughness, fatigue resistance and creep resistance, as well as excellent electrical insulation, solvent resistance and processability, being one of the five general engineering plastics. An acetal polymer i.e. polyformaldehyde, is formed by the formaldehyde polymerization, and it is also often called polyoxymethylene (POM). Preparation of a polymer from formaldehyde was studied as early as the 1920s, but not until 1959 when DuPont developed Delrin had a thermally stable material been prepared. The homopolymer is made by very pure formaldehyde through an anionic polymerization. A copolyformaldehyde was first developed and commercialized by Celanese USA in 1962 under a trade name of "Celcon". It is a polymer obtained mainly by a polymerization of trioxymethylene and dioxolane under a combined action of a catalyst (a main catalyst used at present is BF₃ and ether/butyl ether/ester complexes thereof, the catalyst has an appropriate reaction rate and is easy to separate from the product after reaction) and a molecular weight regulator (dimethoxymethane MEAL). Compared with the homopolyformaldehyde, for the copolyformaldehyde, due to an introduction of a C-C chain to a molecular chain, in a decomposition of polyformaldehyde, when the decomposition reacts to the C-C chain, a chain degradation of formaldehyde is terminated, thereby improving a thermal stability of the material and facilitating processing.

SEBS is a linear triblock copolymer with polystyrene as end blocks and ethylene-butene copolymer obtained by hydrogenation of polybutadiene as a middle elastic block. SEBS is mainly used as a toughening agent in a variety of thermoplastic resins, and it has also been modified for use. Chinese patent 201210572164.2 discloses an ABS/POM alloy, which adds maleic anhydride grafted SEBS as a compatibilizer, but does not make in-depth exploration of other aspects of SEBS modification (such as acid modification or amine modification) to reduce surface gloss of POM. Chinese patent 201611151834.8 discloses a compound modified SEBS sheath material toughened by an ethylene vinyl acetate copolymer, which uses a large amount of stearic acid to swell SEBS. After SEBS is fully swelled in the stearic acid, oily SEBS can be obtained, which can reduce an agglomeration effect of components such as the ethylene vinyl acetate copolymer and limestone in the system. The effect of modifying SEBS to bring low gloss to POM has not been documented.

### SUMMARY

An objective of the present invention is to provide a polyformaldehyde composite material and a preparation method thereof, which has an advantage of low gloss.

Another objective of the present invention is to provide use of SEBS as a delustrant in a polyformaldehyde.

The present invention is realized through the following technical solutions.

A polyformaldehyde composite material, wherein in parts by weight, the polyformaldehyde composite material comprises the following components:
70 to 95 parts of a polyformaldehyde;
5 to 20 parts of a SEBS;
wherein, the SEBS is acid modified or amine modified.

A method of SEBS acid modification is to adopt a bromination method or an acetylation method, a bromine group or an acetyl group is attached to a para position of a benzene ring, and then an acidification is performed by acid or the acetyl group is oxidized to obtain a carboxylic acid functional group.

A method of amine modification is to introduce a nitro group to the para position of the benzene ring in the SEBS, and then the nitro group is converted into an amino group through a reduction reaction.

Preferably, the SEBS is amine modified. Compared with the acid modified SEBS, the amine modified SEBS has a better delustering effect.

Specifically, the method of SEBS acid modification is as follows: dissolving 5 g of SEBS in 50 ml of trichloromethane solution, then adding 0.2 g of anhydrous FeCl₃ into the solution and slowly dropping 2 ml of bromine solution under a stirring condition, stirring the solution for one day at room temperature under a dark condition, precipitating polymer with excess ethanol, subsequently filtering the solution, washing with acetone and water in sequence, and subsequently drying at 100°C to obtain brominated SEBS; dissolving 4 g of the brominated SEBS in 15 ml of diphenyl ether, and adding a mixture of 16 ml of diethyl phosphite, 0.08 g of Pd(dbac)₃·CHCl₃ and 1.2 ml of triethylamine to the solution, and then refluxing for 2 days under nitrogen at 155°C; precipitating polymer with ethanol/water solution (volume ratio 90/10), filtering and drying to obtain an acid modified SEBS.

Pd(dbac)₃ is a transition metal palladium catalyst, and other catalysts can also be used instead.

Specifically, the method of SEBS amine modification is as follows: dissolving 5 g of SEBS in 50 ml of trichloromethane solution, and slowly dropping a mixture of 60 ml of nitric acid and 40 ml of concentrated sulfuric acid into the solution under a stirring condition, after complete dissipation of heat, stirring at 70°C for 1 hour, subsequently neutralizing excess acid with 20% (w/w) NaOH solution, pouring trichloromethane layer into ethanol, precipitating polymer, filtering and drying to obtain a nitrated SEBS; dissolving 4 g of the nitrated SEBS in 30 ml of THF, dissolving 60 g of stannous chloride in 60 ml of HCl, and stirring at 60°C to prepare a reduction mixture; adding the reduction mixture to the previous solution, refluxing at 85°C for 3 hours, then neutralizing with 10% (w/w) NaOH, precipitating polymer with ethanol, filtering and drying to obtain an aminated SEBS.

A general idea of methods of SEBS acid modification and SEBS amine modification can be as above, but the above reagents, dosages, reaction conditions, etc. can be adjusted according to actual conditions.

It is also possible to graft the SEBS with GMA (glycidyl methacrylate) first, and then perform an acid modification on the GMA branch.

The present invention utilizes a steric hindrance effect of polystyrene segment in the SEBS on the polyformaldehyde, with a poor compatibility, and then acid or amine is used to modify the SEBS, which further reduces the compatibility of the SEBS and the polyformaldehyde, and reduces an ability of a polyformaldehyde molecular chain to arrange regularly. When injection molded into a product or template, an incompatibility of the material itself will form a micro-rough effect on a surface of the material. When an incident light reaches the micro-rough surface, a reflection direction of the light will change and a diffuse reflection will occur, and thus a low-gloss polyformaldehyde composite material is obtained.

An acid value of the SEBS is 5-15 (mg CH₃ONa/g). Generally, the SEBS has a certain acid value only after modified with acid or amine.

A test method of the acid value of the SEBS adopts an acid-base titration: adopting 0.1 mol/L CH₃ONa solution to titrate the modified SEBS, and calculating the acid value of the SEBS by a titration end point. Taking a certain amount of SEBS and adding to 50 ml of trichloromethane; after complete dissolution, adding a bromophenol blue indicator, after shaking, performing the titration with CH₃ONa solution, when the solution turns from yellow to blue, stopping the titration and calculating the acid value. "mg CH₃ONa/g" represents the number of milligrams of sodium methoxide required to neutralize 1 g of a sample.

A weight average molecular weight of acid SEBS or amine SEBS of the present invention is 30,000 to 100,000.

Preferably, a styrene segment content of the SEBS is 10% to 40%. The presence of the styrene segment reduces the compatibility with POM due to the steric hindrance effect, thereby effectively reducing the gloss. During the test, it was found that when the styrene segment content is too high, the compatibility is too poor and a delustering performance can be improved; however, that will cause other performances of the POM composite to be too poor. When the styrene segment content is too low, the delustering effect is greatly reduced. As found in the experiment, when the styrene segment content is about 43%, compared to the test example with a styrene segment content of about 37%, impact strength is reduced by 15%, and an application is limited; when the styrene segment content is about 8%, the delustering performance is only 35% of that of the test example with the styrene segment content of about 37%.

The polyformaldehyde is at least one of a homopolyformaldehyde or a copolyformaldehyde; a melting index of the polyformaldehyde is (2 to 28) g/10min (190°C/2.16KG).

In parts by weight, 0.5 to 1.2 parts of a formaldehyde absorbent is further included; the formaldehyde absorbent is selected from at least one of magnesium oxide, magnesium hydroxide, aluminum oxide, and aluminum hydroxide.

Polyformaldehyde may decompose toxic formaldehyde gas during use, melt extrusion, molding, and injection molding, and the formaldehyde absorbent is added according to the situation.

In parts by weight, 0.1 to 10 parts of an auxiliary agent is further included; the auxiliary agent is selected from at least one of an antioxidant, a lubricant, a heat stabilizer, and an UV absorbing additive.

The lubricant is selected from at least one of a stearic acid salt lubricant, a fatty acid lubricant, and a stearate lubricant; the stearic acid salt lubricant is selected from at least one of calcium stearate, magnesium stearate and zinc stearate; the fatty acid lubricant is selected from at least one of a fatty acid, a fatty acid derivative and a fatty acid ester; the stearate lubricant is selected from at least one of pentaerythritol stearates; preferably, the lubricant is selected from at least one of a fatty acid lubricant and a stearate lubricant.

The antioxidant includes a primary antioxidant or a stabilizer (such as a hindered phenol and/or a secondary arylamine) and an optional auxiliary antioxidant (such as a phosphate and/or a thioester). A suitable antioxidant includes, for example, an organic phosphate such as tris(nonylphenyl) phosphite, tris(2,4-di-tert-butylphenyl) phosphite, bis(2,4-di-tert-butylphenyl) pentaerythritol diphosphite, distearyl pentaerythritol diphosphite, etc., an alkylated monohydric phenol or polyphenol; an alkylation reaction product of polyphenol and diene, such as tetra[methylene (3,5-di-tert-butyl-4-hydroxyhydrocinnamate)] methane, etc.; a butylated reaction product of p-cresol or dicyclopentadiene; alkylated hydroquinone; hydroxylated thiodiphenyl ether; alkylidene bisphenol; benzyl compound; ester of β-(3,5-di-tert-butyl-4-hydroxyphenyl)-propionic acid and a monohydric alcohol or polyhydric alcohol; ester of β-(5-tert-butyl-4-hydroxy-3-methylphenyl)-propionic acid and a monohydric alcohol or polyhydric alcohol; ester of a sulfanyl or thioaryl compound, such as distearyl thiopropionate, dilauryl thiopropionate, di(tridecyl)thiopropionate, octadecyl-3-(3,5-di-tert-butyl-4-hydroxyphenyl)propionate, pentaerythritol-tetra[3-(3,5-di-tert-butyl-4-hydroxyphenyl)] propionate, etc.; amide of β-(3,5-di-tert-butyl-4-hydroxyphenyl)-propionic acid, etc.; or a combination containing at least one of the foregoing antioxidants.

A suitable heat stabilizer includes for example an organophosphite, such as triphenyl phosphite, tris(2,6-dimethylphenyl)phosphite, tris(mixed mono- and dinonylphenyl)phosphite, etc.; a phosphonate, such as dimethylphenyl phosphonate, etc.; a phosphate, such as trimethyl phosphate, etc.; or a combination containing at least one of the foregoing heat stabilizers.

A light stabilizer and/or an ultraviolet light (UV) absorbing additive may be added. A suitable light stabilizer includes, for example, a benzotriazole, such as 2-(2-hydroxy-5-methylphenyl)benzotriazole, 2-(2-hydroxy-5-tert-octylphenyl)-benzotriazole and 2-hydroxy-4-n-octyloxybenzophenone, etc., also includes a triazine ultraviolet light absorbent or a combination containing at least one of the foregoing light stabilizers.

A suitable UV absorbing additive includes, for example, a hydroxybenzophenone; a hydroxybenzotriazole; a hydroxybenzotriazine; a cyanoacrylate; an oxalyl dianilide; a benzoxazinone; 2-(2H-benzotriazol-2-yl)-4-(1,1,3-tetratramethylbutyl)phenol (CYASORM 5411); 2-hydroxy-4-n-octyloxybenzophenone (CYASORM 531); 2-[4,6-bis(2,4-dimethylphenyl)-1,3,5-triazin-2-yl]-5-(octyloxy)phenol (1164); 2,2'-(1,4-phenylene)bis(4H-3,1-benzoxazin-4-one) (CYASORM UV-3638); 1,3-bis[(2-cyano-3,3-diphenylacryloyl)oxy]-2,2-bis[[(2-cyano-3,3-diphenylacryloyl)oxy]methyl] propane (UVINUL 3030); a nano-sized inorganic material, such as titanium oxide, cerium oxide, and zinc oxide, all of which have a particle size of less than 100 nm, or the like; or a combination containing at least one of the foregoing UV absorbents.

A preparation method of the above-mentioned polyformaldehyde composite material includes the following steps: adding a polyformaldehyde, a SEBS, an auxiliary agent, and an formaldehyde absorbent into a high-speed mixer to mix uniformly, and then extruding and granulating through a screw to obtain the polyformaldehyde composite material; wherein, the screw has a temperature range of 120 to 200°C, and a speed of 250 to 500 rpm.

Use of SEBS as a delustrant in a polyformaldehyde, which includes the following components in parts by weight: 70 to 95 parts of the polyformaldehyde; 5 to 20 parts of the SEBS; wherein, the SEBS is acid modified or amine modified.

Compared with the prior art, the present invention has the following beneficial effects.

In the present invention, by adding acid modified SEBS or amine modified SEBS with an acid value of 5 to 15 (mg CH₃ONa/g) into the polyformaldehyde, which can reduce the gloss of the polyformaldehyde. Specifically, the acid modified SEBS or the amine modified SEBS is added into the system, and a compatibility of this type of SEBS with the polyformaldehyde resin matrix becomes poor, which reduces an ability of a polyformaldehyde molecular chain to arrange regularly. When injection molded into a product or template, an incompatibility of the material itself will form a micro-rough effect on a surface of the material. When an incident light reaches the micro-rough surface, a reflection direction of the light will change and a diffuse reflection will occur, and thus a low-gloss polyformaldehyde composite material is obtained.

### DETAILED DESCRIPTION

The present invention will be further explained by specific implementations below. The following embodiments are implementations of the present invention that better embody the idea of the invention, but the implementations of the present invention are not limited by the following embodiments.

Raw materials used in experiments of embodiments and comparative examples are the following raw materials, but are not limited to the following raw materials:
Polyformaldehyde: Longyu POM MC90, copolymerized POM, with a melt index: 9 g/10min (190°C/2.16KG);
SEBS-A: acid modified, SEBS raw material being Kraton G1650, self-made modified by applying an acid modification method in a manual, with an acid value of 10.2 mg CH₃ONa/g, a weight average molecular weight of about 70,000, and a styrene segment content of about 30 %;
SEBS-B: amine modified, SEBS raw material being Kraton G1652, self-made modified by applying an amine modification method in a manual, with an acid value of 5.1 mg CH₃ONa/g, a weight average molecular weight of about 50000, and a styrene segment content of about 30%;
SEBS-C: ordinary SEBS, SEBS 3151, without an acid modification or amine modification, with a molecular weight of about 40,000, and a styrene segment content of about 32%;
SEBS-D: S902, with a GMA grafting rate of 3%, without acid modification or amine modification;
SEBS-E: acid modified, GMA grafted SEBS, self-made modified by applying an acid modification method in a manual, with an acid value of 9.7 mg CH₃ONa/g, a weight average molecular weight of about 65000, and a styrene segment content of about 27%;
Magnesium oxide: KYOWAMAG 150;
Antioxidant: hindered phenolic antioxidant IRGANOX 245/hindered phenolic antioxidant RIANOX 1098.

A preparation method of a polyformaldehyde composite material of the embodiments and the comparative examples includes the following steps: adding the polyformaldehyde, the SEBS, an auxiliary agent and a formaldehyde absorbent into a high-speed mixer to mix uniformly, and then extruding and granulating through a screw to obtain the polyformaldehyde composite material; wherein, the screw has a temperature of 120/160/170/180/180/180/180/180/180/190°C, and a rotation speed of 300 rpm.

Each performance test method:
(1) Gloss: a gloss degree is tested by a photoelectric gloss meter. 10 pieces of 100mm^{∗}100mm^{∗}2.0mm square plates each were injection molded, the photoelectric gloss meter (60° angle) was used to test the gloss of 10 square plates, and an average was taken.

**Table 1: A ratio (parts by weight) of each component and each performance test results for the embodiments and the comparative examples**

| | Embod iment 1 | Embod iment 2 | Embod iment 3 | Embod iment 4 | Embod iment 5 | Embod iment 6 | Compa rative Examp le 1 | Compa rative Examp le 2 | Compa rative Examp le 3 |
|---|---|---|---|---|---|---|---|---|---|
| Polyform aldehyde | 85 | 85 | 85 | 85 | 85 | 85 | 85 | 85 | 85 |
| SEBS-A | 5 | 8 | 12 | 20 | - | - | - | - | - |
| SEBS-B | - | - | - | - | 12 | - | - | - | - |
| SEBS-C | - | - | - | - | - | - | 12 | - | - |
| SEBS-D | - | - | - | - | - | - | - | 12 | - |
| SEBS-E | - | | - | - | - | 12 | - | - | - |
| Magnesium oxide | 0.8 | 0.8 | 0.8 | 0.8 | 0.8 | 0.8 | 0.8 | 0.8 | 0.8 |
| Antioxida nt | 0.3 | 0.3 | 0.3 | 0.3 | 0.3 | 0.3 | 0.3 | 0.3 | 0.3 |
| Gloss | 26.2 | 21.5 | 16.8 | 4.3 | 11.3 | 19.7 | 75.2 | 69.8 | 86.5 |

It can be seen from Embodiments 1 to 4 and Comparative Example 3 that as an addition amount of acid modified SEBS increases, the gloss of a surface of the polyformaldehyde composite material decreases.

It can be seen from Embodiment 3 or 5 and Comparative Example 1 or 2 or 3 that ordinary SEBS cannot effectively reduce the surface gloss of the polyformaldehyde composite material.

It can be seen from Embodiment 3 and Embodiment 5 that the amine modified SEBS has a better delustering effect.

## Claims

1. A polyformaldehyde composite material, in parts by weight, comprising the following components:
70 to 95 parts of a polyformaldehyde; and
5 to 20 parts of a SEBS (styrene ethylene butylene styrene);
wherein, the SEBS is acid modified or amine modified.

2. The polyformaldehyde composite material according to claim 1, wherein the acid modified SEBS contains a carboxylic acid functional group; and the amine modified SEBS contains an amino group.

3. The polyformaldehyde composite material according to claim 2, wherein the SEBS has an acid value of 5 to 15 (mg CH₃ONa/g).

4. The polyformaldehyde composite material according to claim 1, wherein the acid modified SEBS is prepared by performing an acid modification, which adopts a bromination method or an acetylation method, a bromine group or an acetyl group is attached to a para position of a benzene ring, and then an acidification is performed by acid or the acetyl group is oxidized to obtain a carboxylic acid functional group; and
wherein the amine modified SEBS is prepared by performing an amine modification, which introduces a nitro group to the para position of the benzene ring in the SEBS, and then the nitro group is converted into an amino group through a reduction reaction; preferably, the SEBS is amine modified.

5. The polyformaldehyde composite material according to claim 4, wherein the SEBS is grafted with GMA (glycidyl methacrylate) first, and then the acid modification is performed on the GMA branch.

6. The polyformaldehyde composite material according to any one of claims 1 to 3, wherein a weight average molecular weight of the SEBS is 30,000 to 100,000, wherein a styrene segment accounts for 10% to 40% of a total segment molecular weight.

7. The polyformaldehyde composite material according to claim 1, wherein the polyformaldehyde is at least one of homopolyformaldehyde or copolyformaldehyde; a melting index of the polyformaldehyde is (2 to 28) g/10min (190°C/2.16KG).

8. The polyformaldehyde composite material according to claim 1, in parts by weight, further comprising 0.5 to 1.2 parts of a formaldehyde absorbent; the formaldehyde absorbent is selected from at least one of magnesium oxide, magnesium hydroxide, aluminum oxide and aluminum hydroxide.

9. The polyformaldehyde composite material according to claim 1, in parts by weight, further comprising 0.1 to 10 parts of an auxiliary agent; the auxiliary agent is selected from at least one of an antioxidant, a lubricant, a heat stabilizer, and an UV absorbing additive.

10. A preparation method of the polyformaldehyde composite material according to claim 9, comprising the following steps: adding the polyformaldehyde, the SEBS, and the auxiliary agent into a high-speed mixer to mix uniformly, and then extruding and granulating by a screw to obtain the polyformaldehyde composite material; wherein, the screw has a temperature of 120 to 200°C, and a rotation speed of 250 to 500 rpm.

11. A use of SEBS as a delustrant in a polyformaldehyde, in parts by weight, comprising the following components: 70 to 95 parts of the polyformaldehyde; 5 to 20 parts of the SEBS; wherein, the SEBS is acid modified or amine modified.
